# EUROPÄISCHE PATENTSCHRIFT

(11) **EP 1 190 262 B1**
(45) Veröffentlichungstag und Bekanntmachung des Hinweises auf die Patenterteilung: **23.11.2005**
(21) Anmeldenummer: 00940157.1
(22) Anmeldetag: 28.04.2000
(51) Int. Cl.: G01P 15/08, G01D 5/353, G01H 9/00

(54) **BRAGG-GITTER-VORRICHTUNG ZUR MESSUNG EINER BESCHLEUNIGUNG**
BRAGG GRATING DEVICE FOR MEASURING AN ACCELERATION
DISPOSITIF A RESEAUX DE BRAGG SERVANT A MESURER UNE ACCELERATION

(30) Priorität: 21.05.1999 DE 19923448
(43) Veröffentlichungstag der Anmeldung: 27.03.2002
(73) Patentinhaber: SIEMENS AKTIENGESELLSCHAFT, 80333 München (DE)
(72) Erfinder: KRÄMMER, Peter, D-91052 Erlangen (DE); WILLSCH, Michael, D-90762 Fürth (DE)
(86) Internationale Anmeldenummer: PCT/DE2000/001347
(87) Internationale Veröffentlichungsnummer: WO 2000/072025

(56) Entgegenhaltungen:
- WO-A-99/39214
- GB-A- 2 323 441
- US-A- 5 394 488
- US-A- 5 426 297
- US-A- 5 892 860
- XU M G ET AL: "THERMALLY-COMPENSATED BENDING GAUGE USING SURFACE-MOUNTED FIBRE GRATINGS" , INTERNATIONAL JOURNAL OF OPTOELECTRONICS (INCL.OPTICAL COMPUTING & PROCESSING),GB,TAYLOR & FRANCIS, LONDON, VOL. 9, NR. 3, PAGE(S) 281-283 XP000483065 ISSN: 0952-5432 das ganze Dokument
- STORGAARD-LARSEN T ET AL: "OPTO-MECHANICAL ACCELEROMETER BASED ON STRAIN SENSING BY A BRAGG GRATING IN A PLANAR WAVEGUIDE" , SENSORS AND ACTUATORS A,CH,ELSEVIER SEQUOIA S.A., LAUSANNE, VOL. A52, NR. 1/03, PAGE(S) 25-32 XP000599972 ISSN: 0924-4247 Seite 27, Absatz 1
- TODD M D ET AL: "Performance of elastic beam fiber Bragg grating accelerometers and application to ship monitoring" , 13TH INTERNATIONAL CONFERENCE ON OPTICAL FIBRE SENSORS, KYONGJU, SOUTH KOREA, 12-16 APRIL 1999 , PROCEEDINGS OF THE SPIE - THE INTERNATIONAL SOCIETY FOR OPTICAL ENGINEERING, 1999, SPIE-INT. SOC. OPT. ENG, USA, PAGE(S) 545 - 548 XP000940722 ISSN: 0277-786X Zusammenfassung
- THERIAULT S ET AL: "High-g accelerometer based on in-fiber Bragg grating: a novel detection scheme" , 1998 INTERNATIONAL CONFERENCE ON APPLICATIONS OF PHOTONIC TECHNOLOGY III: CLOSING THE GAP BETWEEN THEORY, DEVELOPMENT, AND APPLICATIONS, OTTAWA, ONT., CANADA, 29-31 JULY 1998 , PROCEEDINGS OF THE SPIE - THE INTERNATIONAL SOCIETY FOR OPTICAL ENGINEERING, 1998, SPIE-INT. SOC. OPT. ENG, USA, PAGE(S) 926 - 930 XP000940719 ISSN: 0277-786X Zusammenfassung

## Beschreibung

Die Erfindung betrifft eine Bragg-Gitter-Vorrichtung zur Messung einer Beschleunigung.

Aus T. A. Berkoff, A. D. Kersey: "Experimental Demonstration of a Fiber Bragg Grating Accelerometer", IEEE Photonics Technology Letters, Vol. 8, No. 12, December 1996, Seiten 1677 - 1679 ist eine Bragg-Gitter-Vorrichtung zur Messung einer Beschleunigung bekannt, die aufweist:
- ein in elastischem Material ausgebildetes optisches Bragg-Gitter zum Zuführen von Licht, und
- eine mit dem Gitter verbundene auslenkbare Masse zur Erzeugung einer von der auf die Masse einwirkenden Beschleunigung abhängigen Trägheitskraft zum Bewirken einer elastischen Dehnung des Gitters.

Die Verbindung der Masse mit dem Gitter ist durch eine nachgiebige Schicht hergestellt, die von einer festen Basisplatte gestützt ist und in die das Gitter eingebettet ist. Die Dehnung des Gitters wird von der sich senkrecht zur Richtung dieser Dehnung bewegenden, insbesondere vibrierenden Masse bewirkt.

Die bekannte Vorrichtung wird wie folgt betrieben: Dem Gitter wird Licht einer breitbandigen Quelle zugeführt. Das Gitter reflektiert einen Anteil des zugeführten Lichts bei einer gitterspezifischen Bragg-Wellenlänge, die sich mit der Dehnung des Gitters ändert. Die Dehnung des Gitters wird von der von der Masse erzeugten Trägheitskraft bewirkt, die proportional zu der auf die Vorrichtung wirkenden und zu messenden Beschleunigung ist. Der reflektierte Anteil des Lichts wird einer Auswerteeinrichtung zugeführt, mit der bestimmt wird, welche Bragg-Wellenlänge in diesem Anteil enthalten ist.

Die Auswerteeinrichtung weist ein Mach-Zehnder-Interferometer mit zwei Armen voneinander verschiedener optischer Länge auf. In die beiden Arme wird der reflektierte Anteil des Lichts eingekoppelt, nach dem Durchlaufen der beiden Arme überlagert und zur Interferenz gebracht und dann einem Detektor zugeführt. Die Bestimmung der im reflektierten Anteil enthaltenen Bragg-Wellenlänge erfolgt mit Hilfe eines in einem der beiden Arme angeordneten Phasenmodulators zur Phasenmodulation des in diesem Arm geführten Teils des reflektierten Anteils des Lichts relativ zu dem im anderen Arm geführten Teils dieses Anteils.

In J. R. Dunphy: "Feasibility study concerning optical fiber sensor vibration monitoring subsystem" in SPIE Vol. 2721, S. 483 - 492 ist eine Bragg-Gitter-Vorrichtung zur Vibrationsüberwachung beschrieben, die zumindest ein in elastischem Material ausgebildetes optisches Bragg-Gitter zum Zuführen von Licht aufweist. Dabei sind Auswerteeinrichtungen zur Messung der gitterspezifischen Bragg-Wellenlänge des Gitters in Betracht gezogen und miteinander verglichen, die ein Spektrometer, ein Interferenzfilter, ein abstimmbares Fasergitter, ein abtastendes Fabry-Perot-Filter, ein wellenlängendispersives Element mit einem abgetasteten Detektor oder ein abgestimmtes akustooptisches Filter aufweisen.

Für eine Bragg-Gitter-Vorrichtung mit vier Bragg-Gittern wird unter diesen Auswerteeinrichtungen eine Einrichtung als relativ vorteilhaft angesehen, die pro Gitter je ein abgestimmtes akustooptisches Filter zur Auswertung des von diesem Gitter reflektierten Anteils des zugeführten Lichts hinsichtlich der in diesem Anteil enthaltenen gitterspezifischen Bragg-Wellenlänge aufweist.

Aus L. Zhang et al: "Spatial and Wavelength Multiplexing Architectures for Extreme Strain Monitoring System Using Identical-Chirped-Grating-Interrogation Technique", in 12^{th} International Conference on Optical Fiber Sensors, October 28-31, 1997, S.452-455 geht hervor, daß die Reflektivität R eines Bragg-Gitters eine Funktion sowohl der Wellenlänge als auch der Spannung des Gitters ist.

Die Reflektivität ist dabei in einem begrenzten Wellenlängenbereich um eine gitterspezifische zentrale Bragg-Wellenlänge herum größer als null und außerhalb dieses Bereichs im wesentlichen gleich null. Bei sich verändernder Spannung verschiebt sich der ganze Wellenlängenbereich linear.

Bei Verwendung von "gechirpten" Bragg-Gittern, d.h. Gittern mit variierender Gitterkonstante, kann eine Reflektivität R des Gitters erhalten werden, die annähernd in Form einer Rechteckkurve von der Wellenlänge abhängt, so daß die Reflektivität innerhalb des Wellenlängenbereichs im wesentlichen konstant ist.

Aus der nicht vorveröffentlichten WO 99/39214 ist ein Beschleunigungsmesser mit einem oder mehreren Bragg-Gitter-Sensoren, die entlang einer oder mehrerer Achsen angeordnet sind, bekannt. Eine Masse, die auf eine Beschleunigung bezüglich einer oder mehrerer Achsen reagiert, staucht oder dehnt dabei den einen oder mehrere Bragg-Gitter-Sensoren und bewirkt damit eine Wellenlängenverschiebung im optischen Signal. Somit enthält das optische Signal Informationen über die Beschleunigung.

In T. Storgaard-Larsen, S. Bouwstra, O. Leistiko: "Opto-mechanical accelerometer based on strain sensing by a Bragg grating in a planar waveguide", Sensors and Actuators A 52 (1996), Seiten 25-32 ist ebenfalls ein optomechanischer Sensor als Beschleunigungsmesser angegeben. Hier ist eine Masse zwischen zwei Faser-Bragg-Gittern derart angeordnet, dass bei Krafteinwirkung auf die Masse ein Faser-Bragg-Gitter gedehnt wird, während das andere Faser-Bragg-Gitter gestaucht wird. Auch hier wird der Wellenlängengehalt des von den Faser-Bragg-Gittern rückgestreuten Lichtes bestimmt, um aus Wellenlängenverschiebungen auf die wirkende Kraft, d.h. Beschleunigung, zu schließen.

In M.G. Xu, J.-L. Archambault, L. Reekie, J.P. Dakin: "Thermally-compensated bending gauge using surface-mounted fibre gratings", International Journal of Optoelectronics, 1994, Vol. 9, Nr. 3, Seiten 281 - 283 ist eine Vorrichtung zur Messung der Biegung eines Auslegerbalkens beschrieben. Dabei wird an gegenüberliegenden Seiten des Balkens jeweils ein Lichtwellenleiter mit einem Faser-Bragg-Gitter angeordnet. Bei Biegung des Balkens wird ein Faser-Bragg-Gitter gedehnt, während das andere Faser-Bragg-Gitter gestaucht wird. Die Auswertung erfolgt auch hier über die Bestimmung des Wellenlängengehalts des rückgestreuten Lichtes.

Aus US 5,394,488 geht ein faseroptischer Geschwindigkeitssensor zur Messung von Zahnradrotationsgeschwindigkeiten hervor, bei dem ein Lichtwellenleiter auf einem magnetostriktiven Material aufgebracht ist, wobei der Lichtwellenleiter zwei zueinander senkrecht angeordnete Faser-Bragg-Gitter umfasst.

Gemäß GB 2 323 441 A ist eine Vorrichtung zur Spannungs- und/oder Temperaturmessung in einem Objekt angegeben, bei der mit einem ersten Faser-Bragg-Gitter-Sensor die mechanische Spannung und/oder die Temperatur gemessen wird, während ein zweiter Faser-Bragg-Gitter-Sensor mit nachgeschaltetem Detektor als Analysator für das rückgestreute Licht dient. Beide Faser-Bragg-Gitter-Sensoren weisen dabei "gechirpte" Bragg-Gitter auf. Zwischen beiden Faser-Bragg-Gitter-Sensoren ist ein optischer Zirkulator angeordnet.

Der im Anspruch 1 angegebenen Erfindung liegt die Aufgabe zugrunde, eine Bragg-Gitter-Vorrichtung zur Messung einer Beschleunigung bereitzustellen, die eine besonders einfache Auswertung ermöglicht.

Zur Lösung der die Vorrichtung betreffenden Aufgabe wird eine Vorrichtung entsprechend den Merkmalen des unabhängigen Patentanspruchs 1 angegeben.

Bei der erfindungsgemäßen Vorrichtung handelt es sich um eine Bragg-Gitter-Vorrichtung zur Messung einer Beschleunigung mit:
- wenigstens zwei jeweils in elastischem Material ausgebildeten und in einer Ausbreitungsrichtung einer zugeführten optischen Strahlung hintereinander angeordneten optischen Bragg-Gittern zum Zuführen optischer Strahlung und
- wenigstens einer mit beiden Gittern verbundenen und zwischen den Bragg-Gittern angeordneten auslenkbaren Masse zur Erzeugung einer von der auf die Vorrichtung wirkenden Beschleunigung abhängigen Trägheitskraft zum Bewirken einer elastischen Dehnung eines der beiden Gitter und gleichzeitigen elastischen Kontraktion des anderen Gitters,
dadurch gekennzeichnet,
- dass die beiden Gitter voneinander verschiedene zentrale Bragg-Wellenlängen aufweisen,
- dass die zentrale Bragg-Wellenlänge eines der beiden Gitter in einer Gitterbandbreite des anderen Gitters liegt,
- und dass ein breitbandiger optischer Detektor zum Empfang eines von den beiden Gittern kommenden Anteils der zugeführten optischen Strahlung vorgesehen ist,
- wobei die Vorrichtung so ausgebildet ist, dass die Intensität eines von den Gittern kommenden Anteils der zugeführten Strahlung als ein Maß der zu messenden Beschleunigung ermittelt wird.

Insbesondere fällt unter diese Lösung der häufig auftretende Fall, daß durch die erzeugte Trägheitskraft einmal ein Verformungszustand der beiden Gitter, bei dem eines der beiden Gitter elastisch gedehnt und gleichzeitig das andere Gitter elastisch kontrahiert ist, und ein anderes Mal ein von diesem Verformungszustand verschiedener anderer Verformungszustand der beiden Gitter bewirkt wird, bei dem umgekehrt das andere Gitter elastisch gedehnt und gleichzeitig das eine Gitter elastisch kontrahiert ist. Insbesondere bei Beschleunigungen in Form von Vibrationen tritt dabei der Fall auf, daß sich der eine und andere Verformungszustand der beiden Gitter abwechseln.

Elastisches Material bedeutet ein Material, bei welchem die erzeugte Trägheitskraft eine so große elastisch Verformung bewirken kann, daß eine durch diese Verformung erzeugte Änderung einer Gitterkonstanten der Bragg-Gitter eine messbare Änderung der gitterspezifischen Bragg-Wellenlänge eines Gitters bewirkt.

Auslenkbare Masse bedeutet eine Masse, die relativ zu den mit der zu messenden Beschleunigung beschleunigten beiden Gittern, beispielsweise relativ zu einem beschleunigten Rahmen, an dem die beiden Gitter befestigt sind, beweglich ist.

Die von der Masse erzeugte Trägheitskraft kann direkt oder, beispielsweise über eine Kraftübertragungseinrichtung, indirekt auf die beiden Gitter wirken.

Da die beiden Bragg-Gitter in einer Ausbreitungsrichtung der zugeführten optischen Strahlung hintereinander angeordnet sind, können diese beiden Gitter in einem optischen Leiter aus elastischem Material zum Führen der Strahlung in der Ausbreitungsrichtung hintereinander ausgebildet sein. Der Leiter kann insbesondere ein optischer Wellenleiter sein, beispielsweise eine bei herkömmlichen Bragg-Gitter-Sensoren verwendete optische Glasfaser.

Die beiden Gitter können so ausgebildet oder präpariert sein, daß sie im trägheitskraftfreien Zustand, d.h. im beschleunigungsfreien Zustand der Vorrichtung, gleiche zentrale Bragg-Wellenlängen aufweisen. Im Hinblick auf die Möglichkeit einer Ausnutzung eines von beiden Gittern hervorgerufenen vorteilhaften linearen Kennlinienbereichs weisen die beiden Gitter im trägheitskraftfreien Zustand voneinander verschiedene zentrale Bragg-Wellenlängen auf, wobei die zentrale Bragg-Wellenlänge eines der beiden Gitter in einer Gitterbandbreite des anderen Gitters liegt.

Bei der Auswertung des von den beiden Gittern kommenden Anteils der zugeführten optischen Strahlung kann in Bezug auf deren gitterspezifischen Bragg-Wellenlängen kein komplizierter schmalbandiger, sondern ein einfacher breitbandiger optischer Detektor verwendet werden.

Vorteilhafte Ausgestaltungen der Vorrichtung gemäß der Erfindung ergeben sich aus den von Patentanspruch 1 abhängigen Ansprüchen.

Bei einer bevorzugten und vorteilhaften Ausgestaltung der erfindungsgemäßen Vorrichtung ist die Masse zwischen den beiden Gittern angeordnet und direkt mit jedem der beiden Gitter verbunden, so daß die von der Masse erzeugte Trägheitskraft direkt auf die Gitter wirkt.

Die Masse kann auch indirekt mit den Gittern über eine Kraftübertragungseinrichtung zum Umsetzen der von der Masse erzeugten Trägheitskraft in eine auf jedes Gitter derart wirkende Kraft verbunden sein, daß eines der beiden Gitter gedehnt und gleichzeitig das andere Gitter kontrahiert wird. In diesem Fall kann die indirekt auf die Gitter wirkende Trägheitskraft und/oder Dehnung oder Kontraktion der Gitter vergrößert oder verkleinert werden.

Zweckmäßig ist es, wenn die Kraftübertragungseinrichtung eine in der Ausbreitungseinrichtung und/oder entgegengesetzt dazu gerichtete Kraft erzeugt, die direkt auf ein Gitter dehnend und auf das andere kontrahierend wirkt. Beispielsweise kann in diesem Fall die Kraftübertragungseinrichtung einen um eine relativ zur Vorrichtung im wesentlichen feste Drehachse drehbaren Hebel oder ein anderes entsprechend wirkendes Getriebe aufweisen.

Bei einer Ausgestaltung der erfindungsgemäßen Vorrichtung weist wenigstens eines der beiden Bragg-Gitter eine feste Gitterkonstante auf. Eine besondere Ausgestaltung zeichnet sich dabei durch eine feste Gitterkonstante jedes der beiden Gitter aus.

Ein verbesserter linearer Kennlinienbereich kann mit einer Ausgestaltung erhalten werden, bei der zumindest eines der beiden Bragg-Gitter eine variable Gitterkonstante aufweist (chirped Gitter), wobei es vorteilhaft und zweckmäßig ist, wenn beide Gitter je eine variable Gitterkonstante aufweisen.

Eine vorteilhafte Anwendung einer erfindungsgemäßen Vorrichtung besteht in der Messung einer mechanischen Vibrationsfrequenz, wobei die Vibrationsfrequenz kleiner als eine Resonanzfrequenz der Vorrichtung ist.

Eine andere vorteilhafte Anwendung einer erfindungsgemäßen Vorrichtung besteht in der Messung einer Vibrationsamplitude einer mechanischen Vibrationsfrequenz, die größer als eine Resonanzfrequenz der Vorrichtung ist.

Die Erfindung wird in der nachfolgenden Beschreibung anhand der Zeichnungen beispielhaft näher erläutert. Es zeigen:
- Figur 1: den prinzipiellen Aufbau einer erfindungsgemäßen Vorrichtung mit zwei Bragg-Gittern,
- Figur 2: ein Kennliniendiagramm der Vorrichtung nach Figur 1, wobei die beiden Bragg-Gitter eine feste Gitterkonstante aufweisen,
- Figur 3: ein Kennliniendiagramm der Vorrichtung nach Figur 1, wobei die beiden Bragg-Gitter eine variable Gitterkonstante aufweisen,
- Figur 4: eine Ausführungsform der Vorrichtung nach Figur 1, bei der die Masse über eine Kraftübertragungseinrichtung mit den beiden Gittern verbunden ist, und
- Figur 5: eine Ausführungsform, bei der mehrere Vorrichtungen nach Figur 1 hintereinander angeordnet sind.

Die Zeichnungen sind schematisch und nicht maßstäblich.

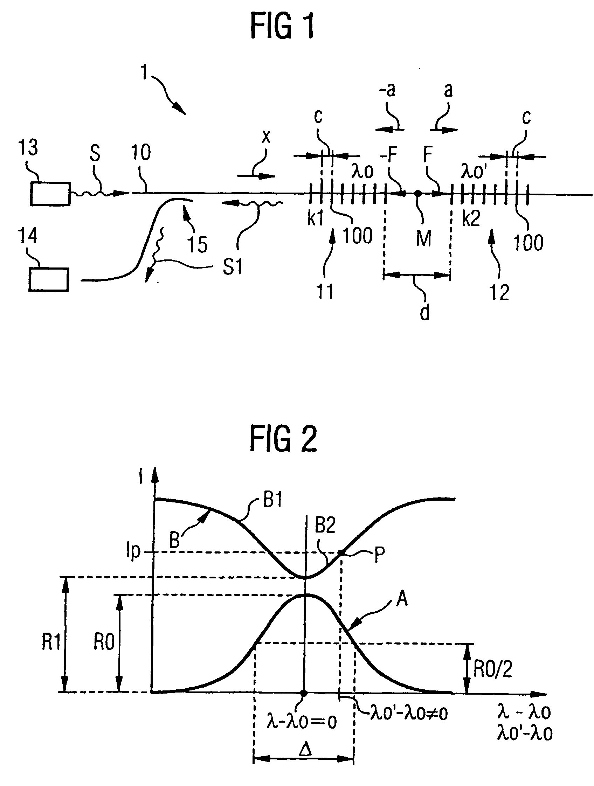

Die in der Figur 1 dargestellte und generell mit 1 bezeichnete Bragg-Gitter-Vorrichtung zur Messung einer Beschleunigung weist zwei jeweils in elastischem Material ausgebildeten optischen Bragg-Gitter 11 und 12 zum Zuführen einer optischen Strahlung S und eine mit beiden Gittern 11 und 12 verbundene auslenkbare Masse M zur Erzeugung einer von der auf die beiden Gitter 11 und 12 wirkenden Beschleunigung abhängigen Trägheitskraft zum Bewirken einer elastischen Dehnung eines der beiden Gitter 11 oder 12 und gleichzeitigen elastischen Kontraktion des anderen Gitters 12 bzw. 11 auf.

Die von einer Strahlungsquelle 13 erzeugte optische Strahlung S breitet sich beispielsweise in der in Figur 1 mit **x** bezeichneten Ausbreitungsrichtung aus, parallel zu der auch die zu messende und mit **a** bezeichnete Beschleunigung auf die beiden Gitter 11 und 12 wirkt. Beispielsweise ist die Beschleunigung **a** eine Komponente einer Beschleunigung, die unter einem von null verschiedenen Winkel zur Richtung **x** auf die beiden Gitter 11 und 12 wirkt.

Die beiden Bragg-Gitter 11 und 12 sind vorzugsweise in der Ausbreitungsrichtung **x** hintereinander angeordnet, so daß ein durch das Gitter 11 hindurchgegangener (nicht dargestellter) Anteil der auf dieses Gitter 11 treffenden Strahlung S auf das Gitter 12 trifft.

Beispielsweise sind die beiden Gitter 11 und 12 in der Richtung **x** in einem Abstand d voneinander angeordnet. In diesem Fall kann die Masse M beispielsweise und wie in der Figur 1 angedeutet zwischen beiden Bragg-Gittern 11 und 12 angeordnet und direkt mit jedem der beiden Gitter 11 und 12 verbunden sein.

Werden die beiden Gitter 11 und 12 beispielsweise in der Richtung **x** mit der zu messenden Beschleunigung **a** beschleunigt, so erzeugt die relativ zu den beiden Gittern 11 und 12 parallel zu dieser Richtung **x** auslenkbare Masse M eine entgegengesetzt zur Richtung **x** wirkende Trägheitskraft **-F = M·a**, die auf das Gitter 11 kontrahierend und gleichzeitig auf das Gitter 12 dehnend wirkt.

Werden dagegen die beiden Gitter 11 und 12 entgegengesetzt zur Richtung **x** mit der zu messenden Beschleunigung **-a** beschleunigt, so erzeugt die Masse M eine in die Richtung **x** wirkende Trägheitskraft **F = -M·a**, die auf das Gitter 11 dehnend und gleichzeitig auf das Gitter 12 kontrahierend wirkt.

Da jedes der beiden Gitter 11 und 12 in elastischem Material ausgebildet ist, kann das aus den beiden Gittern 11 und 12 und der damit verbundenen Masse M gemeinsam bestehende System als ein mechanisches System betrachtet werden, das aus zwei in der Richtung **x** elastischen Federn 11 und 12 und der mit diesen Federn verbundenen Masse M besteht, wobei jede der beiden Federn 11 und 12 eine durch das jeweilige elastische Material bestimmte Federkonstante k1 bzw. k2 aufweist.

Sind die beiden Gitter 11 und 12 in Material jeweils gleicher Elastizität ausgebildet, gilt k1 = k2. Dies ist beispielsweise der Fall, wenn, wie in Figur 1 angedeutet, die beiden Gitter 11 und 12 auf einem sich in der Richtung **x** erstreckenden gemeinsamen optischen Leiter 10 ausgebildet sind, der im wesentlichen homogen aus einem einzigen elastischen Material besteht, und in welchem die optische Strahlung S dem Gitter 11 und ein durch dieses Gitter 11 hindurchgegangener Anteil dieser Strahlung S dem Gitter 12 zugeführt wird.

Beispielsweise ist der Leiter 10 eine optische Faser aus Glas oder Kunststoff, in der die Gitter 11 und 12 in bekannter Weise ausgebildet sind. Die Masse M kann zwischen den Gittern 11 und 12 mit dem Leiter 10 verbunden sein.

Jedes der beiden Gitter 11 und 12 weist mehrere in der Richtung **x** aufeinanderfolgende Gitterlinien 100 und eine durch den Abstand zwischen jeweils zwei benachbarten Gitterlinien 100 dieses Gitters 11 bzw. 12 bestimmte Gitterkonstante c auf, die sich vergrößert, wenn das Gitter 11 bzw. 12 in oder entgegengesetzt zur Richtung **x** gedehnt wird, und sich verkleinert, wenn das Gitter 11 bzw. 12 in oder entgegengesetzt zur Richtung **x** kontrahiert wird. Entsprechend wird bei jedem Gitter 11 und 12 die von der Gitterkonstanten c abhängige und damit gitterspezifische zentrale Bragg-Wellenlänge λ0 bzw. λ0' dieses Gitters 11 bzw. 12 bekanntermaßen in einer bestimmten Richtung verschoben, wenn das Gitter 11 bzw. 12 gedehnt wird, und in der zu dieser bestimmten Richtung entgegengesetzten Richtung verschoben, wenn das Gitter 11 bzw. 12 kontrahiert wird.

Da im vorliegenden Fall eines der beiden Gitter 11 oder 12 gedehnt und gleichzeitig das andere Gitter 12 bzw. 11 kontrahiert wird, werden die jeweiligen gitterspezifischen zentralen Bragg-Wellenlängen λ0 bzw. λ0' der beiden Gitter 11 und 12 in zueinander entgegengesetzten Richtungen verschoben.

Ein Gitter 11 oder 12 kann eine feste oder variable Gitterkonstante c aufweisen. Bei fester Gitterkonstanten c bleibt diese Konstante c, d.h. der Abstand zwischen jeweils zwei in der Richtung **x** aufeinanderfolgenden Gitterlinien 100 konstant, während sich bei variabler Gitterkonstanten c dieser Abstand ändert.

Bei Verwendung zweier Gitter 11 und 12 gleicher Reflektivität R und jeweils fester Gitterkonstante c ist das in der Figur 2 dargestellte Kennliniendiagramm von Bedeutung.

In diesem Diagramm ist auf der Abszisse die Differenz λ-λ0 zwischen einer optischen Wellenlänge λ und der zentralen Bragg-Wellenlänge λ0 des Gitters 11 und auf der Ordinate eine optische Intensität I aufgetragen.

Die Kurve A in diesem Diagramm gibt die von der Wellenlängendifferenz λ-λ0 abhängige Reflektivität R des Gitters 11 unter der Voraussetzung an, daß dieses Gitter 11 allein ohne Berücksichtigung des Gitters 12 betrachtet ist und mit optischer Strahlung S der Wellenlänge λ bestrahlt wird. Diese Reflektivität R gibt die Intensität I des von diesem allein betrachteten Gitter 11 reflektierten Anteils S1 der diesem Gitter 11 zugeführten optischen Strahlung S in Abhängigkeit von der Wellenlängendifferenz λ-λ0 an und kann bei fester Gitterkonstante c dieses Gitters 11 als eine Gaußkurve oder ähnliche glockenförmige Kurve angenommen werden, die bei λ-λ0 = 0 einen maximalen Wert R0 hat.

Analoges gilt für das mit Strahlung S der Wellenlänge λ bestrahlte das Gitter 12 der Bragg-Wellenlänge λ0', bei dem die Reflektivität R, d.h. die von der Wellenlängendifferenz λ-λ0' abhängige Intensität I des von diesem allein betrachteten Gitters 12 reflektierten Anteils S1 der zugeführten optischen Strahlung S bei fester Gitterkonstante c dieses Gitters 12 ebenfalls als eine Gaußkurve oder ähnliche glockenförmige Kurve angenommen werden kann, die bei λ-λ0' = 0 einen maximalen Wert hat. In der Figur 2 ist die Kurve der Reflektivität R dieses Gitters 12 der Einfachheit halber nicht dargestellt.

Die glockenförmige Kurve der Reflektivität R jedes solchen Bragg-Gitters 11 und 12 legt je eine bestimmte Gitterbandbreite dieses Gitters fest, die beispielsweise als die Halbwertsbreite dieser Kurve angenommen sein kann. Die Halbwertsbreite ist der Abstand zwischen den beim halben maximalen Wert der Kurve der Reflektivität R liegenden beiden Punkten dieser Kurve, die im Fall des Gitters 11 die in der Figur 2 beispielhaft dargestellte Kurve A ist, bei welcher der halbe maximale Wert gleich R0/2 und die Gitterbandbreite mit Δ bezeichnet ist.

Für die bisher beschriebene Kurve der Reflektivität R jedes Gitters 11 und 12 ist außerdem angenommen, daß sich das jeweilige Gitter 11 bzw. 12 im trägheitskraftfreien Zustand befindet, so daß in diesem Zustand der Abszissenpunkt λ-λ0=0 bzw. λ-λ0'=0 speziell bei der zentralen Bragg-Wellenlänge λ = λ0 bzw. λ = λ0' des Gitters 11 bzw. 12 liegt.

Wird das Gitter 11 oder 12 durch Dehnung und/oder Kontraktion parallel zur Richtung **x** aus dem trägheitskraftfreien Zustand gebracht, verschiebt sich die ganze Kurve der Reflektivität R, d.h. beim Gitter 11 die Kurve A, längs der Abszisse nach links oder rechts, so daß nach dieser Dehnung und/oder Kontraktion der maximale Wert der Kurve der Reflektivität R des Gitters 11 bzw. 12 bei λ-λ0 ± Δλ0=0 bzw. λ-λ0' ± Δλ0'=0 liegt, wobei sich das Vorzeichen von Δλ0 bzw. Δλ0' danach bestimmt, ob Dehnung oder Kontraktion des Gitters 11 bzw. 12 vorliegt, und der Betrag von Δλ0 bzw. Δλ0' vom Ausmaß dieser Dehnung oder Kontraktion abhängt.

Bei der Kurve B der Figur 2 ist angenommen daß beide Gitter 11 und 12 vorhanden sind, daß die optische Strahlung S dem Gitter 11 zugeführt ist und daß auf das zweite Gitter 12 der vom ersten Gitter 11 durchgelassene Anteil der Strahlung S trifft. Darüber hinaus ist eine Lichtquelle 13 vorausgesetzt die zumindest jede Wellenlänge λ der Gitterbandbreite jedes Gitters 11 und 12 sowohl im trägheitskraftfreien Zustand als auch in jedem vorkommenden Dehnungs- und/oder Kontraktionszustand dieses Gitters 11 bzw. 12 erzeugt.

Obgleich eine diese Wellenlängen zeitlich nacheinander erzeugende Quelle 13 nicht prinzipiell ausgeschlossen ist, ist es vorteilhaft, eine viel einfacher zu realisierende breitbandige Quelle 13 zu verwenden, die alle diese Wellenlängen gleichzeitig zur Verfügung stellt.

Unter der Voraussetzung einer derartigen breitbandigen Quelle 13 gibt die Kurve B die über alle Wellenlängen λ der breitbandigen Quelle 13 integrierte Intensität I des von beiden Gittern 11 und 12 stammenden und vom Gitter 11 entgegengesetzt zur Richtung **x** zurückkommenden reflektierten Anteils S1 der dem Gitter 11 zugeführten breitbandigen optischen Strahlung S in Abhängigkeit von der Differenz λ0'-λ0 zwischen der gewählten zentralen Bragg-Wellenlänge λ0' des Gitters 12 und der gewählten zentralen Bragg-Wellenlänge λ0 des Gitters 11 an.

Die Kurve B ist im vorliegenden Fall der jeweils festen Gitterkonstanten c der Gitter 11 und 12 eine umgekehrt glockenförmige Kurve und weist bei λ0'-λ0 = 0 einen minimalen Wert R1 auf, der vom maximalen Wert R0 der Kurve der Reflektivität R des Gitters 11 abhängt.

Links und rechts von diesem minimalen Wert R1 weist die Kurve B je einen Kurvenast B1, B2 auf, der von diesem Wert R1 aus streckenweise annähernd linear ansteigt.

Sind die beiden Gitter 11 und 12 beispielsweise im trägheitskraftfreien Zustand so gewählt, daß sie jeweils die gleiche feste Gitterkonstante c, die gleiche zentrale Bragg-Wellenlänge λ0 = λ0' und den gleichen maximalen Wert R0 bei der Bragg-Wellenlänge λ0 = λ0' aufweisen, liegt der Arbeitspunkt der beiden Gitter 11 und 12 beim minimalen Wert R1 der Kurve B, d.h. eine gleichzeitige Dehnung eines und Kontraktion des anderen der beiden Gitter 11 und 12 bewirkt eine Änderung der integrierten Intensität I des reflektierten Anteils S1 entsprechend der Kurve B nur in der Nähe dieses Minimums R1. Dieser Arbeitspunkt ist für Vibrationsmessungen geeignet, bei denen nur die Amplitude der Schwingung interessiert.

Werden dagegen Gitter 11 und 12 verwendet, die im trägheitskraftfreien Zustand voneinander verschiedene zentrale Bragg-Wellenlängen λ0 ≠ λ0' aufweisen, kann der gemeinsame Arbeitspunkt der beiden Gitter 11 und 12 in den annähernd linearen schrägen Teil des Kurvenasts B1 oder B2 der Kurve B gelegt werden, beispielsweise in den in Figur 2 dargestellten und bei λ0'-λ0 > 0 liegenden Punkt P des Kurvenasts B2, bei dem der reflektierte Anteil S1 die integrierte Intensität Ip aufweist.

Werden bei einem derart gewählten Arbeitspunkt die beiden Gitter 11 und 12 gleichzeitig zueinander entgegengesetzt gedehnt und kontrahiert, ändert sich in Abhängigkeit davon die Differenz λ0'-λ0 zwischen der zentralen Bragg-Wellenlänge λ0' des Gitters 12 und der zentralen Bragg-Wellenlänge λ0 des Gitters 11, wodurch sich der Arbeitspunkt auf der Kurve B in der einen oder anderen Richtung gegenüber dem Arbeitspunkt im trägheitskraftfreien Zustand der Gitter 11 und 12 verschiebt. Entsprechend ändert sich die integrierte Intensität des reflektierten Anteils S1, wobei die Änderung der integrierten Intensität proportional zur Steigung der Kurve B im trägheitskraftfreien Arbeitspunkt ist.

In bezug auf den beispielhaften trägheitskraftfreien Arbeitspunkt P in Figur 2 bewirkt eine Änderung der Differenz λ0'-λ0 um ± Δλ eine Änderung von Ip um ± ΔI = b·(± Δλ), wobei b die positive Steigung des Kurvenastes B2 im Punkt P bedeutet.

Ideal ist es, den Arbeitspunkt in einen oder zumindest in die Nähe eines vorhandenen Wendepunkts des jeweiligen Kurvenastes B1 oder B2 zu legen, da in der Umgebung dieses Punktes dieser Kurvenast B1 bzw. B2 besonders linear ist.

In der Praxis wird beispielsweise ausreichende Linearität erreicht, wenn der Betrag |λ0'-λ0| etwa 1/3 der Gitterbandbreite Δ des Gitters 11 beträgt. Die meßbaren Dehnungen und Kontraktionen der Gitter 11 und 12 liegen im Bereich Δ/4, so daß sich beispielsweise bei einem Gitter 11 mit Δ = 350 nm bei λ0 = 1550 nm eine maximale Dehnung oder Kontraktion von etwa 100 µε ergibt.

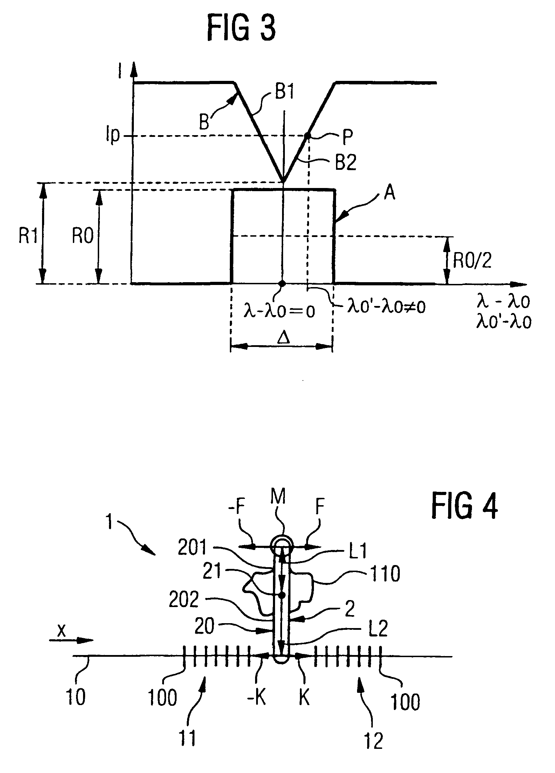

Eine Kurve B mit im Vergleich zur glockenförmigen Kurve B nach Figur 2 verbesserter Linearität kann bei Verwendung eines Gitters 11 und/oder 12 mit variabler Gitterkonstante c erhalten werden. In der Figur 3 ist der Idealfall eines Kennliniendiagramms dargestellt, der mit solchen Gittern zumindest näherungsweise erreicht wird.

Gemäß Figur 3 ist die der Kurve A nach Figur 2 entsprechende Kurve A des Gitters 11 eine Rechteckfunktion, die gegeben ist durch I = R0 für λ > λ0-Δ/2 und λ < λ0+Δ/2 und I = 0 für alle übrigen λ, wobei Δ Gitterbandbreite des Gitters 11 ist.

Die der Kurve B nach Figur 2 entsprechende Kurve B der Figur 3 weist ebenfalls bei λ0'-λ0 = 0 einen minimalen Wert R1 auf, der vom maximalen Wert R0 des Gitters 11 abhängt. Links und rechts von diesem Minimum R1 weist diese Kurve B jedoch einen Kurvenast B1 auf, der zwischen 0 und -Δ/2 streng linear ist, und einen Kurvenast B2, der zwischen 0 und +Δ/2 streng linear ist.

Der gemeinsame Arbeitspunkt der beiden Gitter 11 und 12 wird in den linearen Kurvenast B1 oder B2 gelegt, beispielsweise in den Punkt P des Kurvenasts B2. Die meßbaren Dehnungen und Kontraktionen der Gitter 11 und 12 liegen auch hier im Bereich Δ/4, vorteilhafterweise jedoch bei linearer Kennlinie und erweitertem Meßbereich, da bei Gittern mit variabler Gitterkonstante c die Gitterbandbreite im Vergleich zu Gittern mit fester Gitterkonstante c bedeutend größer sein kann.

Die voneinander verschiedenen zentralen Bragg-Wellenlängen λ0 und λ0' der beiden Gitter 11 bzw. 12 sollten in jedem Fall so gewählt sein, daß die zentrale Bragg-Wellenlänge eines der beiden Gitter, beispielsweise die zentrale Bragg-Wellenlänge λ0' des Gitters 12, in einer Gitterbandbreite des anderen Gitters liegt, im Beispiel der Gitterbandbreite Δ des Gitters 11. Die Gitterbandbreite eines Bragg-Gitters 11 oder 12 ist generell ein Bereich, in welchem die Kurve der Reflektivität R dieses Gitters 11 bzw. 12 als von null verschieden angesehen wird.

Aufgrund der Kurve B mit dem zumindest streckenweise nicht konstanten aber annähernd linearen Kurvenast B1 und/oder B2 ist zur Auswertung des von den Gittern 11 und 12 kommenden Anteils S1 der zugeführten breitbandigen optischen Strahlung S vorteilhafterweise nur noch ein breitbandiger optischer Detektor 14 notwendig, dem dieser Anteil S1 zugeführt wird, beispielsweise über einen optischen Koppler 15 zum Auskoppeln dieses Anteils S1 aus dem Leiter 10.

Die in der Figur 4 dargestellte Vorrichtung 1 unterscheidet sich von der Vorrichtung 1 nach Figur 1 nur dadurch, daß die Masse M nicht direkt sondern indirekt über eine Kraftübertragungseinrichtung 2 in Form eines um eine relativ zur Vorrichtung 1 im wesentlichen feste Drehachse 21 drehbaren Hebel 20 mit den Gittern 11 und 12 verbunden ist.

Die Drehachse 21 steht senkrecht zur Zeichenebene der Figur 4 und ist beispielsweise durch drehbares Anlenken des Hebels 20 an einem Rahmen 110 der Vorrichtung 1 erzeugt. An einem ersten Hebelarm 201 des Hebels 20 ist die Masse M befestigt und ein zweiter Hebelarm 202 ist mit jedem der beiden Gitter 11 und 12 verbunden. Das Verhältnis L1/L2 zwischen der Länge L1 des ersten Hebelarms 201 und der Länge L2 des zweiten Hebelarms 202 bestimmt das Übertragungsverhalten der Kraftübertragungseinrichtung 2.

Eine von der Masse M erzeugte, in oder entgegengesetzt zur Richtung **x** gerichtete Trägheitskraft **F** bzw. **-F** wird vom Hebel 20 in eine entgegengesetzt zur Richtung **x** wirkende Kraft **-K** bzw. in Richtung **x** wirkende Kraft **K** umgesetzt. Durch die Kraft **-K** wird das Gitter 11 kontrahiert und gleichzeitig das Gitter 12 gedehnt, durch die Kraft **K** wird das Gitter 12 kontrahiert und gleichzeitig das Gitter 11 gedehnt.

Bei der Vorrichtung 1 nach Figur 4 sind nur die Teile dargestellt und beschrieben, die für die Kraftübertragungseinrichtung 2 von Bedeutung sind, alle übrigen Teile dieser Vorrichtung 1 sind gleich den bei der Vorrichtung 1 nach Figur 1 bereits beschriebenen und dargestellten Teilen.

Es ist zweckmäßig, die beiden Gitter 11 und 12 so vorzuspannen, daß jedes Gitter 11 und 12 im trägheitskraftfreien Zustand bis zu einem gewissen Grad bereits elastisch vorgedehnt ist. Ein bereits vorgedehntes Gitter läßt sich leichter elastisch kontrahieren als ein nicht vorgedehntes Gitter.

Zweckmäßig ist es beispielsweise, den optischen Leiter 10 elastisch vorzuspannen, so daß bei der Kontraktion eines Gitters 11 oder 12 nur die elastische Vordehnung des Leiters 10 vermindert wird und keine Knickung des Leiters 10 auftritt. Beispielsweise kann der Leiter 10 auf einem Rahmen wie dem Rahmen 110 in Figur 4 vorgespannt gehalten sein.

Die Vorrichtung 1 nach Figur 1 oder Figur 4 wird generell so betrieben, daß den Gittern 11 und 12 optische Strahlung S eines die zentrale Bragg-Wellenlänge λ0 und λ0' jedes der beiden Gitter 11 und 12 enthaltenden Wellenlängenbereichs zugeführt und die Intensität I des von den Gittern kommenden Anteils S1 der zugeführten Strahlung S als ein Maß der zu messenden Beschleunigung gemessen wird.

Da in der Umgebung beispielsweise des Arbeitspunktes der beiden Gitter 11 und 12 diese Intensität I linear von der Wellenlängendifferenz λ0'-λ0 abhängt, kann von dieser gemessenen Intensität I direkt auf die auf die beiden Gitter 11 und 12 ausgeübte Beschleunigung geschlossen werden.

Die Vorrichtung 1 nach Figur 1 oder Figur 4 kann vorteilhaft als Vibrationsmesser zur Messung einer Vibrationsamplitude verwendet werden, wenn die Vibrationsfrequenz ω größer als eine stets vorhandene Resonanzfrequenz ω0 der ganzen Vorrichtung 1 gewählt ist. Bei diesen Vibrationsfrequenzen ω ist die Auslenkung der Masse M vorteilhafterweise unabhängig von der Vibrationsfrequenz ω proportional zur Vibrationsamplitude, die gleich der Auslenkung der mit der Vibrationsfrequenz ω zur Vibration angeregten beiden Gitter 11 und 12 ist.

Die Vorrichtung 1 nach Figur 1 oder Figur 4 kann vorteilhaft auch derart als Beschleunigungsmesser zur Messung einer Beschleunigung verwendet werden, daß die Vorrichtung 1 mit einer Vibrationsfrequenz ω zu einer Vibration angeregt wird und die Vibrationsfrequenz ω kleiner als eine Resonanzfrequenz ω₀ der Vorrichtung 1 ist. Bei diesen Vibrationsfrequenzen ω ist die Auslenkung der Masse M vorteilhafterweise von der Vibrationsfrequenz ω und damit von der Beschleunigung abhängig.

Der verfügbare Frequenzbereich kann sowohl im Fall des Beschleunigungsmessers als auch im Fall des Vibrationsmessers in der Nähe der Resonanz durch Dämpfung vergrößert werden.

Bei der Vorrichtung 1 nach Figur 1 oder Figur 4 sind die beiden Bragg-Gitter 11 und 12 in der Richtung **x** genau hintereinander angeordnet. Der Schutzbereich des Anspruchs 1 umfaßt auch Vorrichtungen, bei denen die beiden Bragg-Gitter in der Richtung **x** hintereinander und/oder nebeneinander angeordnet sind.

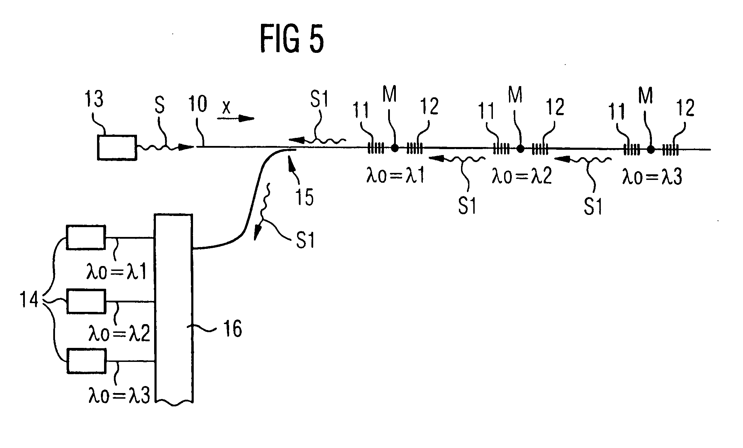

Bei der in der Figur 5 dargestellten Ausführungsform sind mehrere Vorrichtungen 1 derart vorhanden, daß die jeweiligen Gitterpaare, deren jedes aus den beiden mit einer Masse M verbundenen Gittern 11 und 12 besteht, aufeinanderfolgend auf dem optischen Leiter 10 angeordnet sind.

Die Gitterpaare sind auf voneinander verschiedene zentrale Bragg-Wellenlängen λ0 = λ1, λ0 = λ2, λ0 = λ3 usw. eingestellt. Jedem Gitterpaar ist je ein breitbandiger optischer Detektor 14 zugeordnet, der auf die jeweilige Bragg-Wellenlänge λ0 = λ1, λ0 = λ2, bzw. λ0 = λ3 usw. abgestimmt ist.

Die Strahlungsquelle 13 ist so ausgebildet, daß sie eine breitbandige optische Strahlung S erzeugt, die alle Bragg-Wellenlängen λ0 = λ1, λ0 = λ2, λ0 = λ3 usw. enthält.

Der von jedem Gitterpaar kommende jeweilige Anteil S1 der Strahlung S wird durch einen optischen Koppler 15 aus dem Leiter 10 ausgekoppelt und dem zugeordneten Detektor 14 zugeführt.

Bei Verwendung eines optischen Wellenlängendemultiplexers 16 zum voneinander Trennen der zentralen Bragg-Wellenlängen λ0 = λ1, λ0 = λ2, λ0 = λ3 usw. der von den Gitterpaaren im wesentlichen gemeinsam kommenden Anteile S1 genügt zum Auskoppeln ein einziger Koppler 15. Als Wellenlängendemultiplexer 16 kann beispielsweise der im US-Patent 5 680 489 beschriebene Gitterspektrograph oder ein gleichwirkender Demultiplexer verwendet werden.

Bei jeder vorstehend beschriebenen Vorrichtung 1 ist der von den beiden Gittern 11 und 12 kommende Anteil S1 der optischen Strahlung S der von diesen Gittern 11 und 12 reflektierte Anteil. Dieser Anteil S1 kann auch der von den beiden Gittern durchgelassene Anteil sein, wobei die Auswertung an diesen Anteil anzupassen ist.

## Patentansprüche

1. Bragg-Gitter-Vorrichtung (1) zur Messung einer Beschleunigung (**a, -a**) mit:
- wenigstens zwei jeweils in elastischem Material ausgebildeten und in einer Ausbreitungsrichtung (x) einer zugeführten optischen Strahlung (S) hintereinander angeordneten optischen Bragg-Gittern (11, 12) zum Zuführen optischer Strahlung (S) und
- wenigstens einer mit beiden Gittern (11, 12) verbundenen und zwischen den Bragg-Gittern (11, 12) angeordneten auslenkbaren Masse (M) zur Erzeugung einer von der auf die Vorrichtung (1) wirkenden Beschleunigung (**a, -a**) abhängigen Trägheitskraft (**-F, F**) zum Bewirken einer elastischen Dehnung eines (11; 12) der beiden Gitter (11, 12) und gleichzeitigen elastischen Kontraktion des anderen Gitters (12; 11),
**dadurch gekennzeichnet,**
- **dass** die beiden Gitter (11, 12) voneinander verschiedene zentrale Bragg-Wellenlängen (λ0, λ0') aufweisen,
- **dass** die zentrale Bragg-Wellenlänge (λ0'; λ0) eines (12; 11) der beiden Gitter (11, 12) in einer Gitterbandbreite (Δ) des anderen Gitters (11; 12) liegt,
- und **dass** ein breitbandiger optischer Detektor (13) zum Empfang eines von den beiden Gittern (11, 12) kommenden Anteils (R1) der zugeführten optischen Strahlung (R) vorgesehen ist,
- wobei die Vorrichtung (1) so ausgebildet ist, dass aus den Signalen des Detektors (13) die Intensität (I) eines von den Gittern (11, 12) kommenden Anteils (S1) der zugeführten Strahlung (S) als ein Maß der zu messenden Beschleunigung (**a, -a**) ermittelt wird.

2. Vorrichtung nach Anspruch 1, wobei die Masse (M) zwischen den beiden Bragg-Gittern (11, 12) angeordnet und mit jedem der beiden Gitter (11, 12) verbunden ist.

3. Vorrichtung nach einem der vorhergehenden Ansprüche, wobei zumindest eines der beiden Bragg-Gitter (11, 12) eine feste Gitterkonstante (c) aufweist.

4. Vorrichtung nach einem der vorhergehenden Ansprüche, wobei zumindest eines der beiden Bragg-Gitter (11, 12) eine variable Gitterkonstante (c) aufweist.

5. Anwendung einer Vorrichtung (1) nach einem der vorhergehenden Ansprüche zur Messung einer Beschleunigung, wobei die Vorrichtung (1) mit einer Vibrationsfrequenz (ω) zu einer Vibration angeregt wird und die Vibrationsfrequenz (ω) kleiner als eine Resonanzfrequenz (ω₀) der Vorrichtung ist.

6. Anwendung einer Vorrichtung (1) nach einem der Ansprüche 1 bis 5 zur Messung einer Vibrationsamplitude einer mechanischen Vibrationsfrequenz (ω), die größer als eine Resonanzfrequenz (ω₀) der Vorrichtung ist.

## Claims

1. Bragg grating device (1) for measuring an acceleration (**a**, **-a**), having:
- at least two optical Bragg gratings (11, 12), each formed in elastic material and arranged one behind another in a propagation direction (x) of supplied optical radiation (S), for supplying optical radiation (S), and
- at least one deflectable mass (M) connected to both gratings (11, 12) and arranged between the Bragg gratings, (11, 12) for generating an inertial force (**-F, F**) that is dependent on the acceleration (**a, -a**) which acts upon the device (1), in order to produce elastic extension of one (11; 12) of the two gratings (11, 12) and simultaneous elastic contraction of the other grating (12; 11), **characterized**
- **in that** the two gratings (11, 12) have mutually different central Bragg wavelengths (λ0, λ0'),
- **in that** the central Bragg wavelength (λ0'; λ0) of one (12; 11) of the two gratings (11, 12) lies within a grating bandwidth (Δ) of the other grating (11; 12),
- and **in that** a broadband optical detector (13) is provided for receiving a proportion (R1) of the supplied optical radiation (R), coming from the two gratings (11, 12),
- the device (1) being designed such that the intensity (I) of a proportion (S1) of the supplied radiation (S) coming from the gratings (11, 12) is determined from the signals of the detector (13) as a measure of the acceleration (**a, -a**) to be measured.

2. Device according to Claim 1, the mass (M) being arranged between the two Bragg gratings (11, 12) and being connected to each of the two gratings (11, 12).

3. Device according to one of the preceding claims, at least one of the two Bragg gratings (11, 12) having a fixed grating constant (c).

4. Device according to one of the preceding claims, at least one of the two Bragg gratings (11, 12) having a variable grating constant (c).

5. Application of a device (1) according to one of the preceding claims for measuring an acceleration, the device (1) being excited into vibration at a vibration frequency (ω), and the vibration frequency (ω) being lower than a resonant frequency (ω₀) of the device.

6. Application of a device (1) according to one of Claims 1 to 5 for measuring a vibration amplitude of a mechanical vibration frequency (ω) which is higher than a resonant frequency (ω₀) of the device.

## Revendications

1. Dispositif (1) à réseau de Bragg de mesure d'une accélération (a, -a) comprenant :
- au moins deux réseaux (11, 12) de Bragg optiques en matériau élastique, disposés les uns derrière les autres dans une direction (x) de propagation d'un rayonnement (S) optique d'entrée pour l'entrée d'un rayonnement (S) optique et
- au moins une masselotte (M) qui est reliée aux deux réseaux (11, 12), qui est disposée entre les réseaux (11, 12) de Bragg et qui peut être déviée pour la production d'une force (-F, F) d'inertie qui dépend de l'accélération (a, -a) agissant sur le dispositif pour provoquer un allongement élastique de l'un (11 ; 12) des deux réseaux (11, 12) et en même temps une contraction élastique de l'autre réseau (11 ; 12),
**caractérisé**
- **en ce que** les deux réseaux (11, 12) ont des longueurs d'onde (λ0, λ0') centrales de Bragg différentes l'une de l'autre,
- **en ce que** la longueur d'onde (λ0' ; λ0) centrale de Bragg de l'un (12 ; 11) des deux réseaux (11, 12) se trouve dans une largeur (Δ) de bande de réseau de l'autre réseau (11 ; 12),
- et **en ce qu'**un détecteur (13) optique à bande large est prévu pour recevoir l'une des deux parties (R1) arrivant des deux réseaux (11, 12) du rayonnement optique d'entrée,
- le dispositif (1) étant tel qu'à partir des signaux du détecteur (13), l'intensité (I) d'une partie (S1) arrivant des réseaux (11, 12) du rayonnement (S) d'entrée est déterminée en tant que mesure de l'accélération (a, -a) à mesurer.

2. Dispositif suivant la revendication 1, dans lequel la masselotte (M) est disposée entre les deux réseaux (11, 12) de Bragg et est reliée à chacun des deux réseaux (11, 12).

3. Dispositif suivant l'une des revendications précédentes, dans lequel au moins l'un des deux réseaux (11, 12) de Bragg a une constante (c) de réseau qui est fixe.

4. Dispositif suivant l'une des revendications précédentes, dans lequel au moins l'un des deux réseaux (11, 12) de Bragg a une constante (c) de réseau qui est variable.

5. Utilisation d'un dispositif (1) suivant l'une des revendications précédentes pour la mesure d'une accélération, dans laquelle le dispositif (1) est excité à une vibration à une fréquence (ω) de vibration et la fréquence (ω) de vibration est plus petite que la fréquence (ω₀) de résonance du dispositif.

6. Utilisation d'un dispositif (1) suivant l'une des revendications 1 à 5 pour la mesure d'une amplitude de vibration d'une fréquence (ω) de vibration mécanique qui est supérieure à la fréquence (ω₀) de résonance du dispositif.
